# EUROPÄISCHE PATENTSCHRIFT

(11) **EP 3 867 588 B1**
(45) Veröffentlichungstag und Bekanntmachung des Hinweises auf die Patenterteilung: **29.11.2023**
(21) Anmeldenummer: 20711781.3
(22) Anmeldetag: 21.02.2020
(51) Int. Cl.: F28D 20/00

(54) **THERMISCHER ENERGIESPEICHER, INSBESONDERE MEHRZONENSPEICHER IN FORM EINES FLACHBODENTANKS**
THERMAL ENERGY STORAGE DEVICE, IN PARTICULAR MULTI-ZONAL STORAGE DEVICE IN THE FORM OF A FLAT-BOTTOMED TANK
ACCUMULATEUR D'ÉNERGIE THERMIQUE, NOTAMMENT ACCUMULATEUR MULTIZONE SOUS LA FORME D'UN RÉSERVOIR À FOND PLAT

(30) Priorität: 21.02.2019 DE 102019104367; 19.02.2020 DE 202020100895 U
(43) Veröffentlichungstag der Anmeldung: 25.08.2021
(73) Patentinhaber: Technische Universität Chemnitz, 09111 Chemnitz (DE)
(72) Erfinder: URBANECK, Thorsten, 09125 Chemnitz (DE)
(74) Vertreter: Rumrich, Gabriele
(86) Internationale Anmeldenummer: PCT/DE2020/100124
(87) Internationale Veröffentlichungsnummer: WO 2020/169153

(56) Entgegenhaltungen:
- WO-A2-2015/024765
- DE-A1-102016 100 649
- DE-C1- 3 202 471
- US-A1- 2010 126 706

## Beschreibung

Die Erfindung betrifft einen thermischen Energiespeicher, insbesondere einen Mehrzonenspeicher in Form eines Flachbodentanks.

Derartige Energiespeicher dienen der Zuführung, Entnahme und Verdrängung eines Wärme- und Kälteträgers beziehungsweise dessen Lagerung, wobei der Wärme- und Kälteträger, insbesondere zur Nutzung als Energieträger und zur Speicherung thermischer Energie (Wärme- oder Kältespeicher), eingesetzt wird. Neben einer Reihe von Sonderfunktionen finden diese unter anderem für die Druckerhaltung in Netzen Anwendung.

Dabei werden in der Hauptsache die Bauformen Flachbodentank und Druckbehälter unterschieden. In der Fachliteratur ist dazu ausgeführt, dass der Wandaufbau inklusive Boden und Decke die Hauptfunktionen Dichten, Tragen, Dämmen und Schützen realisiert (Hampe: Flüssigkeitsbehälter Bd. 1 und 2, Berlin, Verlag für Bauwesen 1979 und 1982). Der Speicher beinhaltet einen oder mehrere Wärme- bzw. Kälteträger als Speichermedium. Die Be- und Entladeleistung wird durch Fluidströme in Form von direkter und indirekter Wärmeübertragung und/oder die Zufuhr anderer Energieformen, wie zum Beispiel elektrischer Strom, realisiert.

Grundsätzlich ist Speichern in Netzen gemeinsam, dass sie das Systemverhalten verbessern sollen, indem unterschiedliche Lastsituationen im Netz nicht sofort zum Zuoder Abschalten von Erzeugern, wie z. B. Kesseln, Dampfkraftwerken, Gasturbinenkraftwerken und Systemen zur Nutzung erneuerbarer Energiequellen, wie z. B. Solarthermie oder Abwärmequellen (z. B. technologische Abwärme), führen. Lastspitzen können abgefangen werden, wobei die Erzeuger vom Speicher unterstützt werden oder alleine die Versorgung übernehmen. Voraussetzung ist eine ausreichende Beladung bzw. Temperatur. In Zeiten geringerer Abnahme im Netz bzw. bei einem überschüssigen Angebot an Energie oder günstigen Bedingungen zur Erzeugung (z. B. niedrige Wärmegestehungskosten) werden die Speicher wieder aufgeladen.

Dies ist zum Beispiel bei der Erzeugung von Wärme durch Solarthermie oder anderen erneuerbaren Wärmequellen, umgewandelter Wärme aus Strom und industrieller Abwärme erforderlich, da diese Energieformen teilweise nicht gleichmäßig zur Verfügung stehen.

Darüber hinaus können thermische Energiespeicher das Wärmeversorgungssystem flexibilisieren, so dass eine Optimierung des Betriebs möglich ist und verschiedene Servicefunktionen (wie z. B. Druckhaltung) übernehmbar sind.

Weil typische Konstruktionen von Druckspeichern nur ein verhältnismäßig geringes Volumen (kleiner 200 m³) pro Speicher besitzen und auf Grund gesetzlicher Vorschriften einer kostenintensiven Wartung unterliegen, werden insbesondere im Bereich von Nahund Fernwärmenetzen, wenn möglich, große beziehungsweise kompakte Flachbodentanks mit thermischer Schichtung eingesetzt.

Der gattungsgemäße Betrieb von Flachbodentanks mit thermischer Schichtung ist durch eine warme Zone, eine Übergangzone und eine kalte Zone gekennzeichnet. Für einen optimalen Betrieb kommt es darauf an, diese thermische Schichtung aufzubauen und zu erhalten. Bekannte Ausführungen in Form von Einzonenspeichern bestehen im einfachsten Fall aus einer Konstruktion aus Boden, Wand und Dach. Über dem Flüssigkeitsspiegel befindet sich ein Gas oder Gasgemisch, welches annähernd Umgebungsdruck aufweist, alternativ wird eine Niederdruck-Dampfatmosphäre ausgebildet. Ein derartiger Aufbau ist aus der Druckschrift DE 4305867 A1 bekannt.

In der deutschen Offenlegungsschrift DE 10 2013 111 543 A1 ist ein erweitertes System in Form eines Zweizonenspeichers beschrieben, wobei eine feste Zwischendecke das Speichermedium trennt, welche mittels einer hydraulischen Verbindung zum Druckausgleich dieses zusätzlich beaufschlagt. Die Betriebstemperatur von Heißwasser/Warmwasser kann damit im Vergleich zu Einzonenspeichern z. B. mit Gas- bzw. Dampfdruckatmosphäre um einige Grad höher sein, was aber mit einem hohen konstruktiven Aufwand verbunden ist. Die Erhöhung um einige Grad bedeutet praktisch eine Temperatur bis ca. 130°C beziehungsweise eine Erhöhung um ca. 30 K. Weiterhin ist nachteilig, dass dieser Speicher im Vergleich zu Mehrzonenspeichern bei einem im Wesentlichen gleichen Außenumfang ein höheres Speichervolumen benötigt.

Bei Ein- und Zweizonenspeichern gemäß dem Stand der Technik ist nachteilig, dass bei einem Dachraum mit freier Wasseroberfläche die Gefahr der Korrosion besteht.

Ein weiterer Nachteil besteht darin, dass zusätzliche Kosten für die Bereitstellung des Schutzgases oder Dampfs anfallen.

Die Kondensation an der Dachinnenwand verursacht zusätzliche beziehungsweise höhere Wärmeverluste.

Die europäische Patentanmeldung EP 0 067 428 A1 beschreibt einen drucklosen Großtank für die Warmwasserspeicherung mit einem im Dachbereich angeordneten Diffusor. Allerdings ist die Gestaltung des Diffusors und des Anschlusses nicht offenbart. Neben einem im Wesentlichen bekannten Grundaufbau wird hier beschrieben, wie ein nicht wärmegedämmter schwimmender Deckel mit einem vorzugsweise durch einen nach oben vorstehenden Reif und einen nach unten vorragenden Kragen verlängert und der Spalt zwischen Deckel und Seitenwand mit einer auf Wasser schwimmenden Abdichtungsflüssigkeit und schwimmenden Partikeln gefüllt ist. Diese Lösung bietet keine diffusionsdichte Absperrung zum Dachraum und das Verhalten des verwendeten Stoffsystems wird nicht bzw. nicht nachvollziehbar beschrieben.

Nachteilig ist dabei, dass sich unvermeidlicher Weise im Laufe des Betriebes Abdichtungsflüssigkeit mit dem Wasser als wärmespeicherndes Fluid mischen und in das Netz gelangen kann. Eine Aussage zu einem Druckausgleich bzw. zur Absicherung wird nicht getroffen.

Aus der Druckschrift DE 10 2012 013 625 A1 ist ein System aus einem Heißwasserspeicher und einem ORC-Kreislauf bekannt. Der Heißwasserspeicher wird durch einen Elektrodurchlauferhitzer aufgeladen. Er ist durch eine thermisch isolierte Trennplatte in eine Heißwasserzone und eine Kaltwasserzone unterteilt, wobei die Trennplatte mechanisch nach oben und unten bewegt werden kann. Die Anschlüsse von Heißwasserzone und Kaltwasserzone sind über zwei Umwälzpumpen, einen Elektrodurchlauferhitzer und den Gegenstromwärmetauscher eines ORC-Kreislaufes miteinander verbunden.

Die Druckschrift DE 10 2016 100 649 A1 offenbart einen thermischen Energiespeicher in Form eines Flachbodentanks unter Verwendung eines Fluids als Speichermedium, mit einem Speicherboden, einer geschlossenen umlaufenden Speicherwand und einem Speicherdach. Zwischen der Speicherwand und der Schwimmdecke ist eine flexible Dichtung angeordnet, wodurch das Fluid sowie Gase und Dämpfe in einem Ringraum, welcher durch wenigstens eine flexible Lippe geschützt wird, zwischen Schwimmdecke und der Speicherwand gegen das Speicherdach und die Umgebung abdichtet. Die Beund Entladung mittels Fluidaustausch erfolgt über mindestens einen oberen Diffusor an der Schwimmdecke und mindestens einen unteren Diffusor. Dieser Energiespeicher weist lediglich ein Speichervolumen und somit nur eine Speicherzone zur Speicherung eines Wärmeträgers auf. Dieser Energiespeicher ist bis maximal 98°C betreibbar.

Aus WO 2015/024765 A2, die als der nächstliegende Stand der Technik angesehen werden kann, ist ein Wärmespeicher für Wassertemperaturen über 100°C bekannt. Zum Speichern und Bereitstellen von bei der Stromerzeugung anfallender Wärmeenergie mittels eines Fluids sind mindestens eine erste und eine zweite Kammer vorgesehen, wobei die erste über der zweiten Kammer angeordnet ist und eine im Wesentlichen in den Kammern angeordnete Leitung einen oberen Bereich der ersten Kammer mit einem unteren Bereich der zweiten Kammer verbindet, so dass theoretisch zwischen Endpunkten der Leitung im Betrieb keine Temperaturdifferenzen und damit auch idealerweise keine Auftriebskräfte gibt.

Diese Lösung nutzt die Tatsache, dass atmosphärisch offene Tanks (egal welche Höhe) nicht als Druckbehälter, sondern als Bauwerke bzw. Betriebsmittel gelten, unabhängig vom statischen Druck und von der Betriebstemperatur. Durch die Ausführung des Wärmespeichers als offenes Bauteil kann sich kein zusätzlicher Überdruck ausbilden. Es werden übereinander in sogenannten Kammern Schichtspeicher angeordnet, wodurch verhindert wird, dass über 100°C heißes Wasser in die oberen Bereiche des Tanks gelangen kann. Damit der Tank weiterhin als druckloser atmosphärisch offener Tank gilt, müssen alle Kammern durch innenliegende Leitungen verbunden werden. Um zu verhindern, dass es über diese Verbindungsleitungen zu thermischen Ausgleichsströmungen kommt, (da die Dichte des heißen Wassers geringer ist als von kaltem Wasser,) werden immer der obere Bereich einer jeden Kammer mit dem unteren Bereich der darunterliegenden Kammer verbunden: zwischen den Endpunkten der Verbindungsleitungen gibt es im Betrieb theoretisch keine Temperaturdifferenzen und damit auch theoretisch keine Auftriebskräfte.

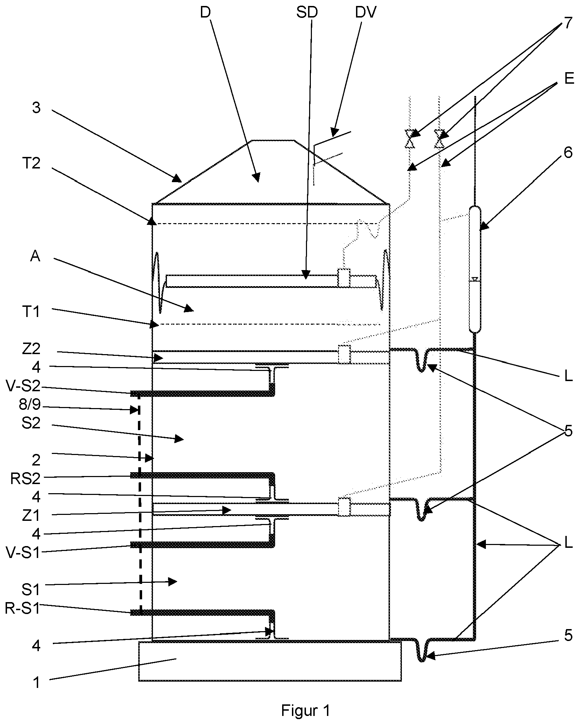

Somit wird das Fluid in übereinanderliegenden, miteinander verbundenen Kammern gespeichert, wobei der heißeste Teil in der untersten Kammer gespeichert wird und wobei der Druck für den heißesten Teil in der untersten Kammer durch darüber liegendes kälteres Fluid erzeugt wird. Die Figur 1 dieser Druckschrift WO 2015/024765 A2 zeigt schematisch und beispielhaft einen Wärmespeicher mit mindestens einer ersten Kammer 2 und einer zweiten Kammer 3 auf, wobei die Kammern 2, 3 meist größtenteils abgeschlossene Hohlräume sind aber, falls es sich um eine oberste Kammer handelt, auch noch oben offen sein können, da der Wärmespeicher ein Warmwasserspeicher ist und Wasser auch in nach oben offenen Behältern gut speicherbar ist. Die erste Kammer 2 ist über der zweiten Kammer 3 angeordnet und eine im Wesentlichen in den Kammern 2, 3 angeordnete Leitung 4 verbindet einen oberen Bereich 5 der ersten Kammer 2 mit einem unteren Bereich 6 der zweiten Kammer 3. Der Wärmespeicher 1 weist hier mehr als nur zwei Kammern 2, 3 auf. Das Ausführungsbeispiel der Figur 1 weist noch eine dritte unterste Kammer 17 auf.

Nachteilig dabei ist, dass bei dieser Lösung keine Schwimmdecke oder eine andere Art einer Schutzschicht vorhanden ist und dass die Kammern über innere Leitungen miteinander verbunden sind.

Die inneren Leitungen sorgen nicht nur für den Druckausgleich. Beim Be- und Entladen muss das gesamte Volumen von Kammer zu Kammer transportiert werden.

Des Weiteren erfolgt durch den Einsatz innenliegender Leitungen kein unabhängiger Druckausgleich. Hier können ungünstige Druckverteilungen nicht ausgeschlossen werden.

Die Be- und Entladung ist bei derartigen Speichern mit hohen Volumenströmen verbunden. Mit einer einfachen Verrohrung lässt sich kein notwendiger Schichtungsbetrieb realisieren. Aufgrund der relativ großen Querschnitte wegen der Be- und Entladeleistung kommt es trotz einer Wärmedämmung zu Zirkulationsströmungen, die einen Schichtungsabbau im realen Betrieb bewirken. Gemäß Figur 5 weist der Speicher ein Gaspolster oder einen Niederdruckdampf im Dachraum auf. Die Erzeugung von Dampf bzw. die Bereitstellung von Gas ist jedoch sehr aufwändig und teuer. Zudem kann es zur Korrosion im Dachraum kommen.

Die Anwendung einer freien Wasseroberfläche ist ungünstig für die Ausbildung einer Schichtung. Zudem muss über dem oberen Ein- und Auslass des Rohres ein bestimmter Wasserstand vorgehalten werden. Dieses Wasservolumen kann nicht zu Speicherzwecken herangezogen werden. Es kommt außerdem zu ungünstigen Mischungseffekten, die die thermische Schichtung vermindern.

Wenn Gas verwendet wird, löst sich das Gas im Speichermedium, was aus Sicht des Netzbetriebs ungünstig ist.

Ein weiterer Nachteil der WO 2015/024765 A2 sind die Bauteile, die Aktoren und die Sicherheitstechnik, die im Speicherraum angeordnet sind. Speicher müssen über Jahre hinweg und sicher betrieben werden. Es ist sehr ungünstig bewegliche oder angesteuerte Bauelemente, insbesondere mit sicherheitsrelevanter Funktion im Speicherraum bzw. mit Wasserkontakt, unterzubringen. Es kommt immer zu Ablagerungen und/oder Korrosion, die ein Versagen wichtiger Funktionen nach sich ziehen. Die offenbarte Lösung ist nur für eine relativ kurze Zeit sicher betreibbar und birgt aber ein signifikantes Risiko. Gegen das grundlegende Prinzip der Selbstsicherheit wird verstoßen. Jede Zone sollte weiterhin für sich unabhängig entlüftbar sein.

Der Speicher gemäß WO 2015/024765 A2 weist ausschließlich einen Verdrängungsbetrieb zwischen den Zonen auf. Der Betrieb mit unterschiedlichen Temperaturniveaus, wie zum Beispiel in der Solarthermie, wo die Beladung einer oberen Zone mit Temperaturen unter 95°C und einer unteren Zone mit Temperaturen über 95°C erfolgt, ist nicht möglich.

Speichertypen in Form von Flachbodentanks als Ein-Zonen-Speicher begrenzen die maximale Speichertemperatur auf 95°C bis 98°C, was dem Siedepunkt von Wasser bei Umgebungsdruck entspricht. Das begrenzt auch die spezifische Speicherkapazität.

Eine weitere Speicherform ist ein Flachbodentank mit einer inneren festen Decke. Die Konstruktion besitzt ein thermisch nicht genutztes Volumen (Auflastung, Ballastzone), was relativ hohe Kosten verursacht und eine relativ geringe Temperaturerhöhung (108°C bis 130°C) bringt. Die Erhöhung der spezifischen Speicherkapazität fällt entsprechend gering aus. Die Konstruktion der Zwischendecke ist relativ aufwendig (Träger/Unterzüge, Trapezblech, Einschweißen der Wärmedämmung). Zudem kommt es im praktischen Betrieb zur Erwärmung des Wassers in der Ballastzone. Die Herstellung der Schutzzone im Dachraum (Stickstoff, Niederdruck-Wasserdampf) ist hier auch aufwendig und kostenintensiv.

Speichertypen in Form von Druckbehälter-Konstruktionen verursachen relativ hohe Herstellungs- bzw. Errichtungskosten, was durch den Wandaufbau (Aufnahme der mechanischen Spannungen durch den Innendruck und Festigkeit gegen Unterdruck) verursacht wird.

Aufgabe der Erfindung ist es, einen thermischen Energiespeicher zu entwickeln, der eine Steigerung der Betriebstemperaturen bei niedrigen Errichtungskosten aufweist, sowie eine Speicheranpassung speziell für Wärme- und/oder Kälte-Versorgungssysteme und eine Kostenreduktion durch eine bessere Nutzung des Speichervolumens ermöglicht und gleichzeitig geeignete Betriebsmöglichkeiten und eine hohe Betriebssicherheit bereitstellt.

Diese Aufgabe wird mit den kennzeichnenden Merkmalen des ersten Patentanspruchs gelöst.

Vorteilhafte Ausgestaltungen ergeben sich aus den Unteransprüchen.

Der thermische Energiespeicher ist insbesondere in der Art eines Mehrzonenspeichers in Form eines Flachbodentanks ausgebildet, aufweisend einen Boden in Form eines Fundaments, ein Dach und einen zwischen Boden und Dach angeordneten Wandaufbau in Zylinderform, wobei der Energiespeicher mindestens zwei Speicherzonen zur Speicherung des Wärmeträgers, vorzugsweise in Form von Wasser aufweist. In dem thermischen Energiespeicher ist eine untere erste Speicherzone und eine zweite Speicherzone oberhalb der ersten Speicherzone angeordnet, wobei die erste und zweite Speicherzone mittels einer ersten fest angeordneten Zwischendecke voneinander getrennt sind. Über der zweiten Speicherzone ist eine, die Speicherzone oben begrenzende weitere zweite flüssigkeitsdichte Zwischendecke angeordnet. Des Weiteren ist oberhalb der zweiten Zwischendecke eine fluidgefüllte beziehungsweise mit einem Wärmeträger oder Wasser gefüllte Ausgleichszone vorhanden, deren Gewicht auf die zweite Speicherzone wirkt. Auf der Ausgleichszone ist eine Schwimmdecke angeordnet. Dies ermöglicht es, eine bessere Nutzung des umbauten Volumens und höhere Speichertemperaturen im Vergleich zu Einzonenspeichern zu realisieren, sowie eine sichere Betriebsweise beziehungsweise sehr lange Betriebsdauer zu erreichen.

Der thermische Energiespeicher ist dabei insbesondere in Form eines inversen Mehrzonen-Speichers ausgebildet.

Die oberste Zone in Form der Ausgleichszone dient dem Ausgleich des Wasservolumens durch Aufnahme und Abgabe des Wärmeträgers, welches durch die thermische Ausdehnung des Speicherwassers und/oder des Netzwassers entsteht.

Der thermische Energiespeicher ist derart ausgebildet, dass die Temperatur der ersten Speicherzone im Regelbetrieb größer als die Temperatur der darüber angeordneten zweiten Speicherzone ist. Bei einer Nutzung von mindestens zwei Speicherzonen bietet der thermische Energiespeicher die Möglichkeit, dass die Speicherzone unterhalb der obersten Speicherzone mit Temperaturen über der Siedetemperatur des Wärmeträgers bei Umgebungsdruck betreibbar ist.

In einer vorteilhaften Ausgestaltung ist die Oberfläche der ersten und zweiten Zwischendecke eben, so dass beim Wärmeträgereintritt ein Dichtestrom ausbildbar ist und in der ersten und zweiten Speicherzone jeweils eine thermische Schichtung erzeugbar ist.

Die Schwimmdecke ist aus flexiblen und/oder starren Bauteilen zusammengesetzt, wobei die Schwimmdecke so konstruiert ist, dass sie sich frei zwischen einem unteren und oberen Totpunkt bewegen kann. Zusätzlich zu der flüssigkeitsdichten und/oder diffusionsdichten Ausgestaltung kann die Schwimmdecke des Weiteren oder alternativ eine Wärmedämmung aufweisen.

Die Wärmedämmung kann weiterhin verwendet werden, um thermische Verluste in den Dachraum zu unterdrücken und Frostschutz zu gewährleisten. Eine absperrbare Entlüftungseinrichtung stellt eine weitgehende Wasserfüllung sicher.

Neben der Schwimmdecke und der zweiten Zwischendecke können auch der Boden und/oder der Wandaufbau und/oder weitere Zwischendecken flüssigkeitsdicht und/oder diffusionsdicht und/oder wärmegedämmt ausgeführt sein.

Die erste und zweite Zwischendecke sowie die Schwimmdecke weisen vorzugsweise eine Entgasung/Entlüftung mit einer daran angeschlossenen Leitung auf, wobei die Leitung/en einzeln oder gemeinsam installiert ist/sind.

Vorzugsweise weisen die erste und zweite Speicherzone wenigstens je eine Be- und Entladevorrichtung auf, wobei die Be- und Entladevorrichtung in Form eines Diffusors oder Schichtenladers im Bereich des Tragwerkes der jeweiligen Zwischendecke ausgebildet ist. Die Be- und Entladung ist bei derartigen Speichern mit hohen Volumenströmen verbunden. Mit einer einfachen Verrohrung lässt sich kein notwendiger Schichtungsbetrieb realisieren. Daher erfolgt der Einsatz von radialen oder linearen Diffusoren oder ähnlichen Einrichtungen wie Rohrverteilen direkt an den Zwischendecken oder dem Boden. Nur so ist der beabsichtigte Betrieb sicherzustellen.

Es können jedoch auch mehrere Be- und Entladeeinrichtungen pro Speicherzonen installiert sein.

Die erste und zweite Speicherzone und die Ausgleichszone sind mittels einer außenliegenden Druckausgleichsleitung verbunden, wobei die Druckausgleichsleitung eine oben liegende Verbindung zur Umgebung aufweist derart, dass ein Volumenausgleich durch die thermische Ausdehnung des Wassers ohne eine signifikante Erhöhung des Innendrucks gewährleistet werden kann.

Durch das Wirken der Wassersäule (zweite Speicherzone und Ausgleichvolumen) beziehungsweise der Druckausgleichsleitung über der ersten Speicherzone können dort höhere Betriebstemperaturen im Vergleich zur Siedetemperatur bei Umgebungsdruck realisiert werden. Durch die außen angeordnete Druckausgleichsleitung und die damit erzeugte Verbindung der einzelnen Speicherzonen ist ein unabhängiger und sicherer Druckausgleich der einzelnen Speicherzonen möglich.

Der Anschluss der Druckausgleichsleitung jeder Zone (erste und zweite Speicherzone und Ausgleichszone) ist im unteren Bereich angeordnet. Vorzugsweise ist je Zone ein Siphon zur Vermeidung/Unterdrückung freier Konvektion in der Druckausgleichsleitung angeordnet.

Im oberen Bereich befindet sich ein schlankes Gefäß (Länge mindestens vom unteren zum oberen Totpunkt) zur Phasentrennung. Dort erfolgt auch die Überwachung des Füllstands. Alternativ kann auch ein Schutzgas eingesetzt werden. Bei der Nutzung eines Schutzgases sind jedoch weitere Einrichtungen in Form von beispielsweise Schutzgasbereitstellung, Sicherheitstechnik notwendig.

Der Energiespeicher weist oberhalb der Schwimmdecke einen Dachraum mit einem darüber angeordneten Dach auf, wobei der Dachraum Maßnahmen aufweist, die die Kondensation der Luftfeuchte kompensieren. Diese Maßnahmen umfassen Ventilatoren, Heizlüfter oder auch die Dämmung des Schutzdaches.

Das Schutzdach unterbindet Wettereinflüsse wie zum Beispiel Niederschlag, Strahlung im Dachraum. Der Dachraum besitzt eine Verbindung zur Umgebung, so dass immer ein Druckausgleich gewährleistet ist.

Der Energiespeicher weist eine erste und zweite Speicherzone auf, es können jedoch auch eine oder mehrere weitere Speicherzonen darunter bzw. darüber angeordnet sein, die zwischen der unteren ersten Speicherzone und dem Boden, oder zwischen der ersten und zweiten Speicherzone oder zwischen der zweiten Speicherzone und der Ausgleichszone des Energiespeichers angeordnet sind, wobei die Speicherzone/n mittels einer zugehörigen Zwischendecke flüssigkeitsdicht und wärmegedämmt von einer weiteren Speicherzone oder der Ausgleichszone getrennt sind. Dabei ist es möglich, dass jede Speicherzone separat be- und entladbar ist und somit separat betreibbar ist.

Es können jedoch auch mindestens zwei Speicherzonen des Energiespeichers über außerhalb der Speicherzonen führende Leitungen oder eine gemeinsame Leitung in Reihe geschaltet sein bzw. werden.

Die Leitungen oder die Leitung münden dann vorteilhafter Weise jeweils über einen Diffusor in die Speicherzonen.

Es besteht ebenfalls die Möglichkeit, dass eine oder mehrere Wärmepumpe/-n mit Verdampfer und Verflüssiger an den Energiespeicher angeschlossen sind und eine obere Speicherzone als eine Wärmequelle und eine untere Speicherzone als eine Wärmesenke für die Wärmepumpe/n dient.

Der erfindungsgemäße thermische Energiespeicher bietet die Vorteile der Erhöhung der Betriebstemperaturen sowie der gleichzeitigen Nutzung einer kostengünstigen Speicherkonstruktionen, vorzugsweise in Form einer Flachbodentank-Bauweise mit relativ geringen Errichtungskosten, großen Volumina und einer günstigen Speicherbetriebsweise. Durch die Temperaturerhöhung erweitert sich der Einsatzbereich z. B. in Bezug auf den Einsatz in bestehenden Versorgungssystemen, Fernwärme, technologische Prozesse oder die Speicherung von Überschüssen in solarthermischen Systemen. Weiterhin kann die neue Speicherkonstruktion als Wärmequelle-Wärmesenken-System eingesetzt werden. Hier können Wärmepumpen eine Zone abkühlen und eine andere Zone zum Beispiel auf Soll-Temperatur des Netzes aufheizen. In die kalte Zone können Niedertemperatur-Quellen gut eingebunden werden. Im Gegensatz zur Speicherkonstruktion sind die thermischen Verluste von der unteren Zone an eine obere Zone wiedergewinnbar. Die kalte Zone könnte auch der Kälteversorgung dienen.

Die Erfindung wird nachfolgend an einem Ausführungsbeispiel und zugehörigen Zeichnungen näher erläutert.

Es zeigen:
- Figur 1: eine schematische Darstellung eines erfindungsgemäßen Energiespeichers mit zwei Speicherzonen,
- Figur 2: eine schematische Ausgestaltung der Beladung und/oder Entladung eines thermischen Energiespeichers bei wahlweise getrenntem Betrieb der Speicherzonen,
- Figur 3: eine schematische Ausgestaltung der Beladung und/oder Entladung eines thermischen Energiespeichers mit zwei Temperaturzonen und wahlweiser Verschaltung der Zonen zum Be- und Entladen,
- Figur 4: den Einsatz einer Wärmepumpe oder mehrerer Wärmepumpen zur Nutzung des Speichers zum Beladen und/oder Entladen als Wärmequelle und Wärmesenke.

Figur 1 zeigt eine schematische Darstellung eines erfindungsgemäßen thermischen Energiespeichers. Der Speicher ist gemäß eines typischen Flachbodentanks aufgebaut und umfasst einen Boden 1, einen Zylindermantel 2 und ein Dach 3. Der Boden 1, der Zylindermantel 2 und das Dach 3 übernehmen die Hauptfunktionen in Form von Dichten, Tragen, Dämmen und Schützen. Das Fundament beziehungsweise der Boden 1 sowie die Seitenwand/Zylindermantel 2 weisen eine nicht dargestellte Wärmedämmung auf, das Dach 3 in Form eines Schutzdaches unterbindet Wettereinflüsse wie zum Beispiel Niederschlag und Strahlung.

Der thermische Energiespeicher besitzt mindestens zwei Speicherzonen S1, S2 in einem Tank, wobei die erste Speicherzone S1 über dem Boden 1 /Fundament und die zweite Speicherzone S2 über der ersten Speicherzone S1 angeordnet ist. Die erste und zweite Speicherzone S1, S2 sind mittels einer fest angeordneten ersten Zwischendecke Z1 flüssigkeitsdicht und optional wärmegedämmt voneinander getrennt. Über der zweiten Speicherzone S2 ist eine, die Speicherzone S2 oben begrenzende weitere flüssigkeitsdichte und optional wärmegedämmte zweite Zwischendecke Z2 angeordnet.

Die Zwischendecken Z1, Z2 sind derart aufgebaut, dass sie einen Anschluss zur Entgasung/Entlüftung E aufweisen. Des Weiteren ist die Oberfläche der ersten und zweiten Zwischendecke Z1, Z2 vorzugweise eben, so dass sich ein Dichtestrom gut ausbilden kann.

Jede erste und zweite Speicherzone S1, S2 besitzt mindestens einen oberen und unteren Diffusor 4. Weiterhin ist jeweils ein Vor- und ein Rücklauf mit einer Speicherzone verbunden und mündet über einen entsprechenden Diffusor 4 in diese.

Die Be- und Entladung des Energiespeichers erfolgt immer über einen Vorlauf und einen Rücklauf.

Hier führt zur unteren ersten Speicherzone S1 ein Vorlauf V-S1. Der Vorlauf V-S1 ist mit einem Diffusor 4 verbunden, der an der ersten Zwischendecke Z1 in der unteren ersten Speicherzone S1 befestigt ist. Der Rücklauf R-S1 aus der ersten Speicherzone Z1 erfolgt aus dessen unteren Bereich über einen Diffusor 4, der am Boden in der unteren ersten Speicherzone S1 befestigt ist.

Die Be- und Entladung der unteren Speicherzone S1 erfolgt über diese beiden Diffusoren 4 (Verdrängungsbetrieb).

Die Be- und Entladung des Energiespeichers der zweiten, oberen Speicherzone S2 erfolgt über einen Vorlauf V-S2, der im Bereich der zweiten Zwischendecke Z2 in die obere zweite Speicherzone S2 ebenfalls über einen Diffusor 4 mündet. Der Rücklauf R-S2 aus der zweiten Speicherzone Z2 erfolgt aus dessen unteren Bereich über einen Diffusor 4, der an oder nahe an der ersten Zwischendecke Z1 in der zweiten Speicherzone S2 angeordnet ist.

Vorzugsweise wird die Be- und Entladung über Vorlauf V-S1 und Rücklauf R-S1 der ersten Speicherzone S1 und Vorlauf V-S2 und Rücklauf R-S2 der zweiten Speicherzone S2 mittels am Tragwerk der Zwischendecken Z1, Z2 sowie am Boden 1 (bei R-S1) direkt befestigter Diffusoren 4 realisiert, wobei diese einen möglichst geringen Abstand zu der jeweiligen ersten/zweiten Zwischendecke Z1, Z2 und zum Boden 1 aufweisen.

In den Speicherzonen S1, S2 wird jeweils ein Betrieb mit thermischer Schichtung angestrebt.

Die Speicherzonen S1, S2 können über getrennte Vorrichtungen be- und entladen werden. Neben dem Einsatz von (radialen) Diffusoren können auch Schichtenlader eingesetzt werden. Des Weiteren können auch mehrere Be- und Entladeeinrichtungen pro Speicherzone installiert sein.

Über der zweiten Zwischendecke Z2 ist eine Ausgleichszone A angeordnet, wobei die Ausgleichszone A mit einem Fluid oder dem Wärmeträger (z. B. Wasser) gefüllt und nach oben von einer darauf angeordneten Schwimmdecke SD begrenzt ist. Die Schwimmdecke SD ist ebenfalls flüssigkeitsdicht und/oder diffusionsdicht ausgebildet und weist bevorzugt eine nicht dargestellte Wärmedämmung auf. Die Wärmedämmung kann weiterhin verwendet werden um thermische Verluste in den Dachraum D zu unterdrücken und Frostschutz zu gewährleisten.

Die Schwimmdecke SD besteht bevorzugt aus flexiblen und starren Bauteilen und ist so konstruiert, dass sie sich frei zwischen einem unteren Totpunkt T1 und einem oberen Totpunkt T2 im Speicher (innerhalb des Zylindermantels 2) vertikal bewegen kann.

Die Ausgleichszone A ist unabhängig von der Anzahl der darunter angeordneten Speicherzonen, sodass diese Ausgleichszone A die oberste Zone bildet und dem Ausgleich des Wasservolumens dient, welches durch die thermische Ausdehnung des Speicherwassers und/oder des Netzwassers entsteht.

Die Druckbeaufschlagung ist bei einem derartigen Speicher viel geringer, das heißt hier erfolgt die Druckauflastung für die erste Speicherzone S1 durch die zweite Speicherzone S2 und die Ausgleichszone A. Dabei erfolgt der Druckausgleich zwischen den Speicherzonen S1, S2 über die Leitung L.

Oberhalb der Ausgleichszone A ist der Dachraum D angeordnet, der eine Verbindung DV zur Umgebung aufweist, so dass immer ein Druckausgleich gewährleistet ist.

Die Entlüftungseinrichtung/Entgasung E der Speicherzonen S1, S2 sowie der Ausgleichszone A ist vorzugsweise absperrbar und stellt eine weitgehende Wasserfüllung sicher.

Die Entlüftung E der einzelnen ersten und zweiten Speicherzonen S1, S2 kann in einer gemeinsamen Leitung L oder in Einzelleitungen je Speicherzone S1, S2, A ausgebildet sein. Eine Einbindung in den Behälter zur Phasentrennung ist ebenfalls möglich.

Die Leitungen E können auch absperrbar ausgeführt sein, beispielsweise zum Schließen nach Inbetriebnahme.

Hier weisen die erste und zweite Zwischendecke Z1, Z2 und die Schwimmdecke SD jeweils ein Entlüftungsventil 7 auf. Von jedem Entlüftungsventil 7 führt eine Leitung des Entlüftungssystems E in die Umgebung, wobei auch Leitungen zusammengeführt werden können.

Die erste und zweite Speicherzone S1, S2 sowie die Ausgleichszone A sind mittels einer Druckausgleichsleitung L verbunden. Von jeder Speicherzone S1, S2 und von der Ausgleichszone A führt dazu eine Druckausgleichsleitung L nach außen in die Umgebung. Die Druckausgleichsleitung/en verlaufen außerhalb des Speichers. Diese Druckausgleichsleitung/en L stellt/stellen die hydraulische Kommunikation zwischen allen Speicherzonen, hier S1, S2 und der Ausgleichszone A, sicher und besitzt/besitzen eine oben liegende Verbindung zur Umgebung. Die Druckausgleichsleitung L gewährleistet einen Volumenausgleich, der vorwiegend durch die thermische Ausdehnung des Wassers entsteht. Durch das Wirken der Wassersäule (obere zweite Speicherzone S2 und Ausgleichszone A) über der unteren ersten Speicherzone S1 können dort (in der ersten Speicherzone S1) höhere Betriebstemperaturen im Vergleich zur Siedetemperatur bei Umgebungsdruck realisiert werden. Durch die konstruktive Ausgestaltung soll freie Konvektion in der Druckausgleichsleitung L vermieden werden. Deswegen sind die Anschlüsse jeder Druckausgleichsleitung L im unteren Bereich mit jeweils einem Siphon 5 zur Vermeidung freier Konvektion vorgesehen. Hier laufen alle Druckausgleichsleitungen L, die von einer Speicherzone S1, S2 und von der Ausgleichszone A aus dem Energiespeicher nach außen führen zu einer gemeinsamen Druckausgleichsleitung L zusammen, die in die Umgebung führt. Im oberen Bereich befindet sich an der Druckausgleichsleitung L ein bevorzugt schlankes Gefäß 6 mit einer Länge mindestens vom unteren Totpunkt T1 zum oberen Totpunkt T2 zur Phasentrennung. In diesem Gefäß 6 erfolgt beispielsweise ebenfalls die Überwachung des Füllstands.

In einer alternativen Ausgestaltung kann auch ein Schutzgas eingesetzt werden, wobei dann weitere Einrichtungen wie zum Beispiel Schutzgasbereitstellung und Sicherheitstechnik notwendig sind.

Um den Energiespeicher gegen Umwelteinflüsse zu schützen, kann die Frostsicherheit beispielsweise mittels elektrischer Begleitheizungen gewährleistet werden.

In dem über der Ausgleichszone A angeordneten Dachraum können Maßnahmen die Kondensation der Luftfeuchte kompensieren. Diese Maßnahmen umfassen beispielsweise Ventilatoren, Heizlüfter und Dämmung des Schutzdaches.

Wird der Rücklauf R-S1 aus der ersten Speicherzone S1 mit dem in die zweite Speicherzone S2 führenden Vorlauf V-S2 über eine Leitung 8/9 verbunden, was durch die gestrichelte Linie dargestellt ist, so sind beide Speicherzonen S1, S2 in Reihe geschaltet. Dann führt in den Energiespeicher von außen nur der Vorlauf V-S1 in die erste Speicherzone S1 und nur ein Rücklauf R-S2 aus der zweiten Speicherzone S2 aus dem Energiespeicher.

Jedes Leitungsende der Leitung 8/9 sollte in der entsprechenden Speicherzone S1, S2 an einen Diffusor 4 angeschlossen sein.

Fehlt diese Leitung 8/9, werden beide Speicherzonen S1 und S2 getrennt be- und entladen und sind somit getrennt betreibbar.

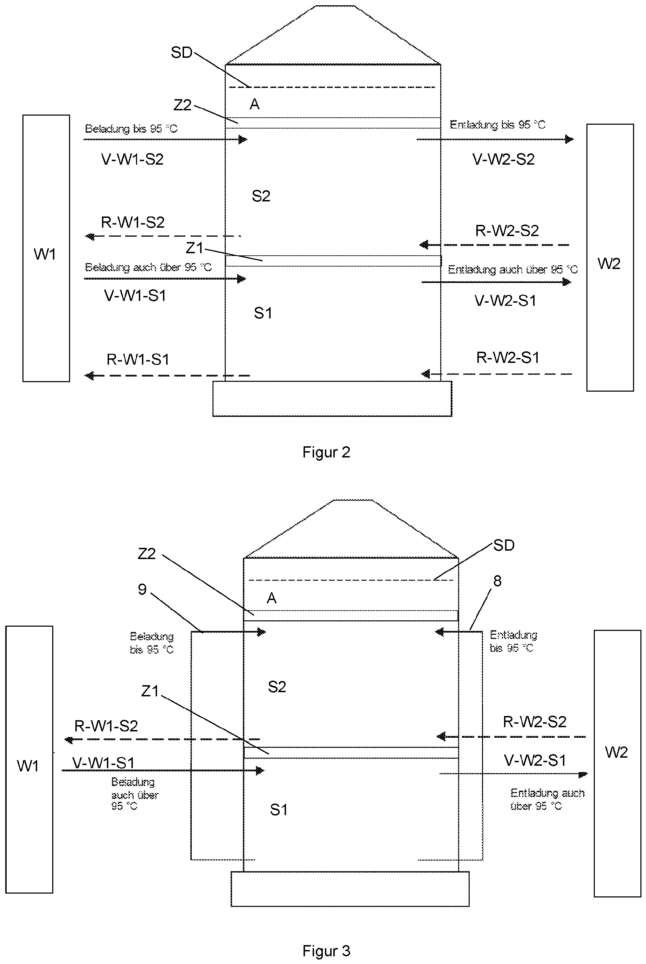

In den Figuren 2 bis 4 werden einige mögliche Ausführungen von erfindungsgemäßen Mehrzonenspeichern bzw. mögliche Anwendungskonzepte dargestellt.

Figur 2 zeigt eine schematische Darstellung einer konstruktiven Ausgestaltung, bei der eine oder mehrere Wärmequellen für die Be- und Entladung von zwei Speicherzonen zur Verfügung stehen. Zwischen der unteren ersten Speicherzone S1 und der oberen zweiten Speicherzone S2 ist eine erste Zwischendecke Z1 angeordnet und zwischen der oberen Speicherzone S2 und der Ausgleichszone A eine zweite Zwischendecke Z2. Über der Ausgleichszone A befindet sich eine Schwimmdecke SD. In jede erste und zweite Speicherzone S1, S2, mündet mindestens ein Vorlauf und es ist an jede Speicherzone S1, S2 mindestens ein Rücklauf angeschlossen. Vor- und Rücklauf dienen zur separaten Be- und Entladung der Speicherzonen S1 und S2.

Innerhalb des Speichers sind die Speicherzonen S1, S2 nicht miteinander verbunden. Wärme ist oft auch mit verschiedenen Temperaturen verfügbar. Ein Beispiel für ein derartiges System sind solarthermische Systeme.

Die erste und zweite Speicherzone S1, S2 können nach der Temperatur separat beladen werden. Der Betriebsbereich erhöht sich und damit die höheren zulässigen Temperaturen in der Speicherzone S1. Ungünstige Stagnationsfälle (z. B. solarthermische Anlagen als Energiequelle) können vermieden werden. Des Weiteren ermöglichen beide Speicherzonen S1, S2 auch eine separate temperaturabhängige Entladung.

Figur 2 zeigt somit beispielhaft die separate Nutzung der Speicherzonen S1, S2.

Aufgrund der Verteilung des hydrostatischen Drucks ist bei der Nutzung von Wasser die maximale Temperatur von der zweiten Speicherzone S2 auf ca. 95°C (Siedetemperatur bei Umgebungsdruck) begrenzt.

Die hier untere erste Speicherzone S1 kann mit höheren Temperaturen betrieben werden. Das hängt insbesondere vom hydrostatischen Druck ab, der bei der unteren Speicherzone S1 höher ist.

Hier erfolgt die Beladung der oberen zweiten Speicherzone S2 mit Temperaturen unter 95°C (Wasser) mit dem Vorlauf V-W1-S2 (Vorlauf von einer Wärmequelle W1 zur Speicherzone S2) und dem Rücklauf R-W1-S2 (Rücklauf zu der Wärmequelle W1 von der Speicherzone S2).

Die Entladung mit Temperaturen unter 95°C (Wasser) der Speicherzone S2 wird mit dem Vorlauf V-W2-S2 (Vorlauf zu einer Wärmesenke W2 von der Speicherzone S2) und dem Rücklauf R-W2-S2 (Rücklauf von der Wärmesenke W2 zu der Speicherzone S2) realisiert.

Die Beladung mit Temperaturen über 95°C (Wasser) der unteren ersten Speicherzone S1 erfolgt mit einem Vorlauf V-W1-S1 (Vorlauf von der Wärmequelle W1 zur Speicherzone S1) und dem Rücklauf R-W1-S1 (Rücklauf von der ersten Speicherzone S1 zur Wärmequelle (W1).

Eine Entladung mit Temperaturen über 95°C (Wasser) der unteren Speicherzone S1 wird mit dem Vorlauf V-W2-S1 (von der unteren Speicherzone S1 zu einer Wärmesenke W2) und dem Rücklauf R-W2-S1 (von der Wärmesenke W2 zur ersten unteren Speicherzone S1) realisiert.

Wenn ein Diffusor pro Speicherzone S1, S2 genutzt wird, sind folgende hydraulische Verbindungen außerhalb des Speichers möglich (vgl. Fig. 1 mit Fig. 2):
- V-S2 kombiniert mit V-W1-S2 und V-W2-S2,
- R-S2 kombiniert mit R-W1-S2 und R-W2-S2,
- V-S1 kombiniert mit V-W1-S1 und V-W2-S1,
- R-S1 kombiniert mit R-W1-S1 und R-W2-S1.

Es ist möglich, dass wie in Figur 1 schematisch dargestellt, hier
- V-W1-S2 und V-W2-S2 in einer Leitung V-S2,
- R-W1-S2 und R-W2-S2 in einer Leitung R-S2,
- V-W1-S1 und V-W2-S1 in einer Leitung V-S1 und
- R-W1-S1 und R-W2-S1 in einer Leitung R-S1
kombiniert sind (was in Figur 2 jedoch nicht dargestellt ist).

Figur 3 zeigt eine Reihenschaltung der unteren ersten Speicherzone S1 mit der oberen zweiten Speicherzone S2.

Die Beladung mit Temperaturen über 95°C (Wasser) der Speicherzone S1 erfolgt mit dem Vorlauf V-W1-S1 (Vorlauf von einer Wärmequelle W1 zur Speicherzone S1), mit Leitung 9 von der ersten Speicherzone S1 zur Speicherzone S2 und mit dem Rücklauf R-W1-S2 (Rücklauf zur Wärmequelle W1 von der zweiten Speicherzone S2).

Die Entladung mit Temperaturen über 95°C (Wasser) der mit einem höheren Druck beaufschlagten unteren ersten Speicherzone S1 erfolgt mit dem Vorlauf V-W2-S1 (Vorlauf zu der Wärmesenke W2 von der von der ersten Speicherzone S1) mit der Leitung 8 von der ersten Speicherzone S1 zur zweiten Speicherzone S2 und mit dem Rücklauf R-W2-S2 (Rücklauf von der Wärmesenke W2 zur zweiten Speicherzone S2).

Die hier separat dargestellten Leitungen 8 und 9 können auch als eine gemeinsame Leitung 8/9 (wie in Figur 1 angedeutet) ausgeführt sein.

Die Leitungen 8, 9 sollten in jede Speicherzone S1, S2 über einen Diffusor 4 münden, d. h. jedes Leitungsende sollte an einen Diffusor 4 angeschlossen sein.

Der in Figur 3 dargestellte thermische Energiespeicher weist somit im Wesentlichen den gleichen Grundaufbau wie in Figur 2 auf, jedoch sind die zwei Speicherzonen S1, S2 so in Reihe verschaltet, dass die Speicherzonen S1, S2 wie eine Zone bezüglich der Beladung und/oder Entladung agieren.

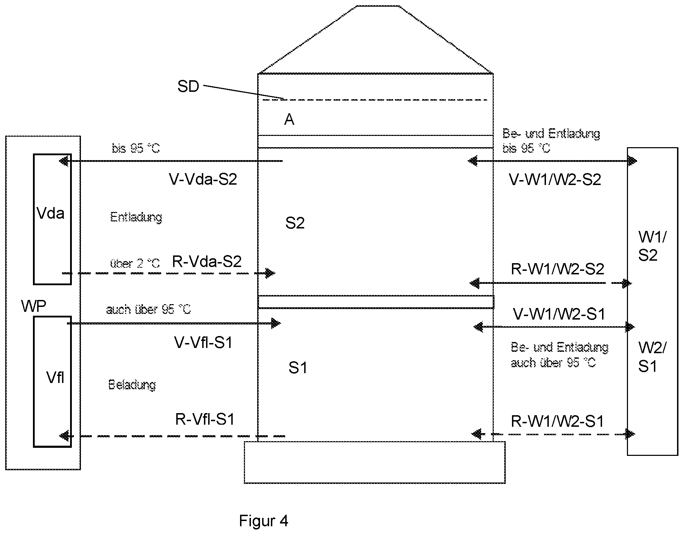

Der Einsatz einer Wärmepumpe WP oder mehrerer Wärmepumpen zur Nutzung des Speichers als Wärmequelle und Wärmesenke ist in Figur 4 dargestellt. Oft muss Niedertemperatur-Wärme auf das Temperaturniveau der Wärmesenkenseite W2 (zum Beispiel in Form des Netzes) gehoben werden. Dafür kommen Wärmepumpen WP zum Einsatz. Vorzugsweise dient Speicherzone S2 als Wärmequelle (Entladung). Die Wärmepumpe belädt dann die Speicherzone S1. Es können aber auch andere Kombinationen gewählt werden. Des Weiteren kann die kalte Zone auch für Kühlzwecke eingesetzt werden.

Gemäß Figur 4 nutzt/nutzen eine oder mehrere Wärmepumpe/-n WP mit Verdampfer Vda und Verflüssiger Vdl die obere zweite Speicherzone S2 als Wärmequelle und die untere erste Speicherzone S1 als Wärmesenke.

Die Wärmezufuhr zum Verdampfer Vda bzw. die Entladung der Speicherzone S2 erfolgt über den Vorlauf V-Vda-S2 (Vorlauf zum Verdampfer Vda von der Speicherzone S2) und den Rücklauf R-Vda-S2 (Rücklauf vom Verdampfer Vda zu der zweiten Speicherzone S2).

Die Wärmeabfuhr vom Verflüssiger Vfl bzw. die Beladung der Speicherzone S1 erfolgt über den Vorlauf V-Vfl-S1 (Vorlauf vom Verflüssiger Vfl zur Speicherzone S1) und den Rücklauf R-Vfl-S1 (Rücklauf zum Verflüssiger Vfl von der ersten unteren Speicherzone S1).

Unabhängig davon kann die Speicherzone S2
- über den Vorlauf V-W1/W2-S2 (Vorlauf zwischen einer Wärmequelle W1 oder einer Wärmesenke W2 und der oberen zweiten Speicherzone S2) und
- über den Rücklauf R-W1/W2-S2 (Rücklauf zwischen einer Wärmequelle W1 oder einer Wärmesenke W2 und der oberen zweiten Speicherzone S2)
mit Temperaturen unter 95°C bei der Verwendung von Wasser als Wärmeträger be- oder entladen werden.

Ebenfalls unabhängig davon kann die Speicherzone S1
- über den Vorlauf V-W1/W2-S1 (Vorlauf zwischen einer Wärmequelle W1 oder einer Wärmesenke W2 und der unteren ersten zweiten Speicherzone S1) und
- den Rücklauf R-W1/W2-S1 (Rücklauf zwischen einer Wärmequelle W1 oder einer Wärmesenke W2 und der unteren ersten zweiten Speicherzone S1)
mit Temperaturen über 95°C bei der Verwendung von Wasser als Wärmeträger be- oder entladen werden.

Der erfindungsgemäße thermische Energiespeicher bietet im Vergleich zum Stand der Technik einige Vorteile. So kann ein Betrieb mit mindestens zwei Temperaturniveaus genutzt werden, wobei ein unabhängiger Betrieb der Speicherzonen möglich ist. Des Weiteren ist jede Speicherzone unabhängig entlüftbar. Der thermischer Energiespeicher ist insbesondere in Form eines Mehrzonenspeichers in Form eines Flachbodentanks mit einer Größe von vorzugsweise zwischen 500 m³ bis ca. 40.000 m³ ausgebildet.

### Bezugszeichenliste

- 1: Boden
- 2: Zylindermantel (Wandaufbau in Zylinderform)
- 3: Dach
- 4: Diffusor
- 5: Siphon
- 6: Gefäß
- 7: Entlüftungsventil
- 8: Leitung
- 9: Leitung
- 8/9: Leitung
- A: Ausgleichszone
- D: Dachraum
- DV: Verbindung
- E: Entgasung/Entlüftung
- L: Druckausgleichsleitung

- R-S1: Rücklauf aus der ersten Speicherzone
- R-S2: Rücklauf aus der ersten Speicherzone
- R-Vda-S2: Rücklauf vom Verdampfer Vda zu der zweiten Speicherzone S2
- R-Vfl-S1: Rücklauf zum Verflüssiger Vfl von der ersten unteren Speicherzone S1
- R-W1-S1: Rücklauf von der ersten Speicherzone S1 zur Wärmequelle W1
- R-W1-S2: Rücklauf zu der Wärmequelle W1 von der zweiten Speicherzone S2
- R-W2-S1: von der Wärmesenke W2 zur ersten unteren Speicherzone S1
- R-W2-S2: Rücklauf von der Wärmesenke W2 zur zweiten Speicherzone S2
- R-W1/W2-S1: Rücklauf zwischen einer Wärmequelle W1 oder einer Wärmesenke W2 und der unteren ersten Speicherzone S1
- R-W1/W2-S2: Rücklauf zwischen einer Wärmequelle W1 oder einer Wärmesenke W2 und der oberen zweiten Speicherzone S2

- S1: erste Speicherzone
- S2: zweite Speicherzone
- SD: Schwimmdecke
- Vda: Verdampfer
- Vdl: Verflüssiger
- V-Vda-S2: Vorlauf zum Verdampfer Vda von der Speicherzone S2
- V-Vfl-S1: Vorlauf vom Verflüssiger Vfl zur Speicherzone S1
- V-S1: Vorlauf zur ersten Speicherzone
- V-S2: Vorlauf zur zweiten Speicherzone
- V-W1-S1: Vorlauf von der Wärmequelle W1 zur ersten Speicherzone S1
- V-W1-S2: Vorlauf von einer Wärmequelle W1 zur zweiten Speicherzone S2
- V-W2-S1: Vorlauf von der unteren Speicherzone S1 zu einer Wärmesenke W2
- V-W2-S2: Vorlauf zu einer Wärmesenke W2 von der Speicherzone S2
- V-W1/W2-S1: Vorlauf zwischen einer Wärmequelle W1 oder einer Wärmesenke W2 und der unteren ersten Speicherzone S1
- V-W1/W2-S2: Vorlauf zwischen einer Wärmequelle W1 oder einer Wärmesenke W2 und der oberen zweiten Speicherzone S2

- WP: Wärmepumpe
- W1: Wärmequelle
- W2: Wärmesenke
- Z1: erste Zwischendecke
- Z2: zweite Zwischendecke

## Patentansprüche

1. Thermischer Energiespeicher, insbesondere Mehrzonenspeicher in Form eines Flachbodentanks, aufweisend einen Boden (1) in Form eines Fundaments, ein Dach (3) und einen, zwischen Boden (1) und Dach (3) angeordneten Wandaufbau in Zylinderform (2), wobei der Energiespeicher mindestens zwei Speicherzonen (S1, S2) zur Speicherung eines Wärmeträgers aufweist, wobei eine untere erste Speicherzone (S1) und eine zweite Speicherzone (S2) oberhalb der ersten Speicherzone (S1) angeordnet ist, wobei die erste und zweite Speicherzone (S1, S2) mittels einer ersten fest angeordneten Zwischendecke (Z1) voneinander getrennt sind , wobei
über der zweiten Speicherzone (S2) eine die Speicherzone (S2) oben begrenzende flüssigkeitsdichte weitere zweite Zwischendecke (Z2) angeordnet ist und oberhalb der flüssigkeitsdichten zweiten Zwischendecke (Z2) eine fluidgefüllte (Wärmeträger/Wasser) Ausgleichszone (A) vorhanden ist, deren Gewicht auf die zweite Speicherzone (S2) wirkt und dass auf der Ausgleichszone (A) eine Schwimmdecke (SD) angeordnet ist.

2. Thermischer Energiespeicher nach Anspruch 1, **dadurch gekennzeichnet, dass** die Temperatur der unteren ersten Speicherzone (S1) größer als die Temperatur der oberen zweiten Speicherzone (S2) ist, wobei die Speicherzone unterhalb der obersten Speicherzone mit Temperaturen über dem Siedepunkt des Wärmeträgers bei Umgebungsdruck betreibbar ist.

3. Thermischer Energiespeicher nach Anspruch 1 oder 2, **dadurch gekennzeichnet, dass** die Oberfläche der ersten und zweiten Zwischendecke (Z1, Z2) eben ist, so dass beim Wärmeträgeraustritt ein Dichtestrom ausbildbar ist und in der ersten und zweiten Speicherzone (S1, S2) jeweils eine thermische Schichtung erzeugbar ist.

4. Thermischer Energiespeicher nach einem der Ansprüche 1 bis 3, **dadurch gekennzeichnet, dass** der Boden (1) und/oder der Wandaufbau (2) und/oder die erste Zwischendecke (Z1) und/oder die zweite Zwischendecke (Z2) und/oder die Schwimmdecke (SD) diffusionsdicht und/oder wärmegedämmt ist/sind und/oder dass die erste Zwischendecke (Z1) und/oder die Schwimmdecke (SD) flüssigkeitsdicht ist/sind.

5. Thermischer Energiespeicher nach einem der Ansprüche 1 bis 4, **dadurch gekennzeichnet, dass** die erste Zwischendecke (Z1), die zweite Zwischendecke (Z2) und die Schwimmdecke (SD) eine Entgasung/Entlüftung (E) mit einer daran angeschlossenen Leitung aufweisen, wobei die Leitungen einzeln oder gemeinsam installiert sind.

6. Thermischer Energiespeicher nach einem der Ansprüche 1 bis 5, **dadurch gekennzeichnet, dass** die erste und zweite Speicherzone (S1, S2) wenigstens je eine Be- und Entladevorrichtung aufweisen, wobei die Be- und Entladevorrichtung in Form eines Diffusors (4) oder Schichtenladers im Bereich des Tragwerkes der jeweiligen Zwischendecke und/oder des Bodens (Z1, Z2, 1) ausgebildet ist.

7. Thermischer Energiespeicher nach einem der Ansprüche 1 bis 6, **dadurch gekennzeichnet, dass** die Schwimmdecke (SD) aus flexiblen und/oder starren Bauteilen ausgebildet ist und dass sich die Schwimmdecke (SD) frei zwischen einem unteren Totpunkt (T1) und oberen Totpunkt (T2) bewegen kann.

8. Thermischer Energiespeicher nach einem der Ansprüche 1 bis 7, **dadurch gekennzeichnet, dass** die erste und zweite Speicherzone (S1, S2) und die Ausgleichszone (A) mittels einer Druckausgleichsleitung (L) verbunden sind, wobei die Druckausgleichsleitung (L) eine oben liegende Verbindung zur Umgebung aufweist derart, dass ein Volumenausgleich durch die thermische Ausdehnung des Wassers erzeugbar ist.

9. Thermischer Energiespeicher nach Anspruch 8, **dadurch gekennzeichnet, dass** der Anschluss der Druckausgleichsleitung (L) jeder ersten und zweiten Speicherzone (S1, S2) im unteren Bereich angeordnet ist und dass je erster und zweiter Speicherzone (S1, S2) ein Siphon (5) zur Vermeidung freier Konvektion in der Druckausgleichsleitung (L) angeordnet ist.

10. Thermischer Energiespeicher nach einem der Ansprüche 1 bis 9, **dadurch gekennzeichnet, dass** der Energiespeicher oberhalb der Schwimmdecke (SD) einen Dachraum (D) aufweist, wobei der Dachraum (D) Maßnahmen aufweist, die die Kondensation der Luftfeuchte kompensieren.

11. Thermischer Energiespeicher nach einem der Ansprüche 1 bis 10, **dadurch gekennzeichnet, dass** der Dachraum (D) eine Verbindung (V) zur Umgebung aufweist derart, dass ein Druckausgleich gewährleistet ist.

12. Thermischer Energiespeicher nach Anspruch 1, **dadurch gekennzeichnet, dass** der Energiespeicher eine oder mehrere weitere, zwischen der unteren ersten Speicherzone (S1) und dem Boden (1) des Energiespeichers angeordnete, Speicherzonen aufweist, wobei die Speicherzonen mittels mindestens einer, zwischen den Speicherzonen angeordneten Zwischendecke flüssigkeitsdicht und wärmegedämmt voneinander getrennt sind.

13. Thermischer Energiespeicher nach einem der Ansprüche 1 bis 12, **dadurch gekennzeichnet, dass** jede Speicherzone (S1, S2) separat be- und entladbar ist.

14. Thermischer Energiespeicher nach einem der Ansprüche 1 bis 12, **dadurch gekennzeichnet, dass** mindestens zwei Speicherzonen (S1, S2) über außerhalb der Speicherzonen (S1, S2) führende Leitungen (8 und 9) oder eine gemeinsame Leitung (8/9) in Reihe schaltbar sind, wobei die Leitungen (8 und 9) oder die Leitung (8/9) endseitig über einen Diffusor (4) in die Speicherzonen (S1, S2) münden.

15. Thermischer Energiespeicher nach einem der Ansprüche 1 bis 12, **dadurch gekennzeichnet, dass** eine oder mehrere Wärmepumpe/-n (WP) mit Verdampfer (Vda) und Verflüssiger (Vdl) an den Energiespeicher angeschlossen sind und eine obere zweite Speicherzone (S2) als eine Wärmequelle und eine untere erste Speicherzone (S1) als eine Wärmesenke für die Wärmepumpe/n (WP) dient.

## Claims

1. Thermal energy storage device, in particular a multi-zonal storage device in the form of a flat-bottomed tank, having a floor (1) in the form of a foundation, a roof (3) and a wall structure in the form of a cylinder (2) arranged between the floor (1) and the roof (3), wherein the energy storage device has at least two storage zones (S1, S2) for storing a heat transfer medium, wherein a lower first storage zone (S1) and a second storage zone (S2) above the first storage zone (S1) are arranged, wherein the first and second storage zones (S1, S2) are separated from one another by means of a first fixedly arranged intermediate ceiling (Z1), wherein a further liquid-tight intermediate ceiling (Z2) bounding the storage zone (S2) at the top is arranged above the second storage zone (S2), and above the liquid-tight second intermediate ceiling (Z2) there is a fluid-filled (heat transfer medium/water) compensation zone (A) whose the weight acts on the second storage zone (S2), and in that a floating ceiling (SD) is arranged on the compensation zone (A).

2. Thermal energy storage device according to claim 1, **characterized in that** the temperature of the lower first storage zone (S1) is greater than the temperature of the upper second storage zone (S2), wherein the storage zone below the uppermost storage zone is operable at temperatures above the boiling point of the heat transfer medium at ambient pressure.

3. Thermal energy storage device according to claim 1 or 2, **characterized in that** the surface of the first and second intermediate ceiling (Z1, Z2) is flat, so that a sealing flow can be formed at the heat transfer medium outlet and thermal stratification can be generated in the first and second storage zones (S1, S2) in each case.

4. Thermal energy storage device according to one of claims 1 to 3, **characterized in that** the floor (1) and/or the wall structure (2) and/or the first intermediate ceiling (Z1) and/or the second intermediate ceiling (Z2) and/or the floating ceiling (SD) is/are diffusion-tight and/or thermally insulated and/or **in that** the first intermediate ceiling (Z1) and/or the floating ceiling (SD) is/are liquid-tight.

5. Thermal energy storage device according to one of claims 1 to 4, **characterized in that** the first intermediate ceiling (Z1), the second intermediate ceiling (Z2) and the floating ceiling (SD) have a degassing/venting (E) with a line connected thereto, wherein the lines are installed individually or jointly.

6. Thermal energy storage device according to one of claims 1 to 5, **characterized in that** the first and second storage zones (S1, S2) each have at least one charging and discharging device, wherein the charging and discharging device is in the form of a diffuser (4) or stratified charger in the region of the supporting structure of the respective intermediate ceiling and/or floor (Z1, Z2, 1).

7. Thermal energy storage device according to one of claims 1 to 6, **characterized in that** the floating ceiling (SD) is formed of flexible and/or rigid components and **in that** the floating ceiling (SD) can move freely between a bottom dead center (T1) and top dead center (T2).

8. Thermal energy storage device according to one of claims 1 to 7, **characterized in that** the first and second storage zones (S1, S2) and the compensation zone (A) are connected by means of a pressure compensation line (L), wherein the pressure compensation line (L) has an overhead connection to the environment in such a way that a volume compensation can be generated by the thermal expansion of the water.

9. Thermal energy storage device according to claim 8, **characterized in that** the connection of the pressure compensation line (L) of each first and second storage zone (S1, S2) is arranged in the lower region, and **in that** a siphon (5) is arranged in the pressure compensation line (L) for each first and second storage zone (S1, S2) to prevent free convection.

10. Thermal energy storage device according to one of claims 1 to 9, **characterized in that** the energy storage device has a roof space (D) above the floating ceiling (SD), wherein the roof space (D) has measures which compensate for the condensation of the air humidity.

11. Thermal energy storage device according to one of claims 1 to 10, **characterized in that** the roof space (D) has a connection (V) to the environment in such a way that pressure compensation is ensured.

12. Thermal energy storage device according to claim 1, **characterized in that** the energy storage device has one or more further storage zones arranged between the lower first storage zone (S1) and the floor (1) of the energy storage device, wherein the storage zones are separated from one another in a liquid-tight and thermally insulated manner by means of at least one intermediate ceiling arranged between the storage zones.

13. Thermal energy storage device according to one of claims 1 to 12, **characterized in that** each storage zone (S1, S2) can be charged and discharged separately.

14. Thermal energy storage device according to one of claims 1 to 12, **characterized in that** at least two storage zones (S1, S2) can be connected in series via lines (8 and 9) leading outside the storage zones (S1, S2) or via a common line (8/9), wherein the lines (8 and 9) or the line (8/9) open into the storage zones (S1, S2) at the ends via a diffuser (4).

15. Thermal energy storage device according to one of claims 1 to 12, **characterized in that** one or more heat pumps (WP) with evaporator (Vda) and condenser (Vdl) are connected to the energy storage device and an upper second storage zone (S2) serves as a heat source and a lower first storage zone (S1) serves as a heat sink for the heat pump(s) (WP).

## Revendications

1. Accumulateur d'énergie thermique, en particulier accumulateur à plusieurs zones prenant la forme d'un réservoir à fond plat présentant un fond (1) formé par un socle, un toit (3) et une structure de paroi cylindrique (2) disposée entre le fond (1) et le toit (3), lequel accumulateur d'énergie
comprend au moins deux zones d'accumulation (S1, S2) pour accumuler un fluide caloporteur, une première zone d'accumulation (S1) inférieure et une deuxième zone d'accumulation (S2) disposée au-dessus de la première zone d'accumulation (S1), les première et deuxième zones d'accumulation (S1, S2) étant séparées l'une de l'autre au moyen d'une première cloison horizontale (Z1) fixe,
dans lequel une deuxième cloison horizontale (Z2) imperméable aux liquides, délimitant la zone d'accumulation (S2) vers le haut, est disposée au-dessus de la deuxième zone d'accumulation (S2) et il est prévu au-dessus de la deuxième cloison horizontale (Z2) imperméable aux liquides une zone de compensation (A) remplie de fluide (fluide caloporteur/eau) dont le poids agit sur la zone d'accumulation (S2), et dans lequel une cloison flottante (SD) est disposée sur la zone de compensation (A).

2. Accumulateur d'énergie thermique selon la revendication 1, **caractérisé en ce que** la température de la première zone d'accumulation (S1) inférieure est plus élevée que celle de la deuxième zone d'accumulation (S2) supérieure, la zone d'accumulation située en dessous de la zone d'accumulation qui se trouve le plus haut pouvant être régulée à des températures supérieures au point d'ébullition du fluide caloporteur à la pression ambiante.

3. Accumulateur d'énergie thermique selon la revendication 1 ou 2, **caractérisé en ce que** la surface de la première cloison horizontale et de la deuxième (Z1, Z2) est plane, de sorte qu'un courant de densité peut se former dans la sortie de fluide caloporteur et qu'une stratification thermique peut être obtenue dans la première zone d'accumulation et la deuxième (S1, S2).

4. Accumulateur d'énergie thermique selon l'une des revendications 1 à 3, **caractérisé en ce que** le fond (1) et/ou la structure de paroi (2) et/ou la première cloison horizontale (Z1) et/ou la deuxième cloison horizontale (Z2) et/ou la cloison flottante (SD) sont imperméables à la diffusion et/ou dotées d'une isolation thermique et/ou **en ce que** la première cloison horizontale (Z1) et/ou la cloison flottante (SD) sont imperméables aux liquides.

5. Accumulateur d'énergie thermique selon l'une des revendications 1 à 4, **caractérisé en ce que** la première cloison horizontale (Z1), la deuxième cloison horizontale (Z2) et la cloison flottante (SD) présentent un évent de gaz/d'air (E) avec une conduite qui s'y raccorde, les conduites étant installées séparément ou ensemble.

6. Accumulateur d'énergie thermique selon l'une des revendications 1 à 5, **caractérisé en ce que** les première et deuxième zones d'accumulation (S1, S2) comportent chacune au moins un dispositif de chargement et de déchargement, lequel dispositif de chargement et de déchargement est conformé sous la forme d'un diffuseur (4) ou d'un chargeur de strates au niveau de la structure portante de la cloison horizontale en question et/ou du fond (Z1, Z2, 1).

7. Accumulateur d'énergie thermique selon l'une des revendications 1 à 6, **caractérisé en ce que** la cloison flottante (SD) est formée de pièces flexibles et/ou rigides et **en ce que** la cloison flottante (SD) peut se déplacer librement entre un point mort bas (T1) et un point mort haut (T2).

8. Accumulateur d'énergie thermique selon l'une des revendications 1 à 7, **caractérisé en ce que** les première et deuxième zones d'accumulation (S1, S2) et la zone de compensation (A) communiquent au moyen d'une conduite d'équilibrage de la pression (L), laquelle conduite d'équilibrage de la pression (L) présente une communication avec l'environnement située dans la partie supérieure, de façon à permettre un équilibrage du volume par la dilatation thermique de l'eau.

9. Accumulateur d'énergie thermique selon la revendication 8, **caractérisé en ce que** le raccord de la conduite d'équilibrage de la pression (L) de chaque première et deuxième zone d'accumulation (S1, S2) est disposé dans la partie inférieure et **en ce que** chaque première et deuxième zone d'accumulation (S1, S2) comporte un siphon (5) afin d'éviter une convection libre dans la conduite d'équilibrage de la pression (L).

10. Accumulateur d'énergie thermique selon l'une des revendications 1 à 9, **caractérisé en ce que** le réservoir d'énergie présente au-dessus de la cloison flottante (SD) un espace de toit (D), lequel espace de toit (D) est aménagé afin de compenser la condensation de l'humidité de l'air.

11. Accumulateur d'énergie thermique selon l'une des revendications 1 à 10, **caractérisé en ce que** l'espace de toit (D) comporte une communication (V) avec l'environnement, de façon à garantir un équilibrage de la pression.

12. Accumulateur d'énergie thermique selon la revendication 1, **caractérisé en ce qu'**il comporte une ou plusieurs autres zones d'accumulation disposées entre la première zone d'accumulation (S1) inférieure et le fond (1) de l'accumulateur d'énergie, les zones d'accumulation étant séparées de façon imperméable aux liquides et avec une isolation thermique au moyen d'au moins une cloison horizontale disposée entre les zones d'accumulation.

13. Accumulateur d'énergie thermique selon l'une des revendications 1 à 12, **caractérisé en ce que** chaque zone d'accumulation (S1, S2) peut être chargée et déchargée séparément.

14. Accumulateur d'énergie thermique selon l'une des revendications 1 à 12, **caractérisé en ce qu'**au moins deux zones d'accumulation (S1, S2) peuvent être montées en série à l'aide de conduites (8 et 9) menant à l'extérieur des zones d'accumulation (S1, S2) ou d'une conduite (8/9) commune, les conduites (8 et 9) ou la conduite (8/9) débouchant à leur extrémité via un diffuseur (4) dans les zones d'accumulation (S1, S2).

15. Accumulateur d'énergie thermique selon l'une des revendications 1 à 12, **caractérisé en ce qu'**une ou plusieurs pompes à chaleur (WP) munies d'un évaporateur (Vda) et d'un condenseur (Vdl) sont raccordées à l'accumulateur d'énergie et une deuxième zone d'accumulation (S2) supérieure sert de source de chaleur et une première zone d'accumulation (S1) inférieure de puits de chaleur pour la ou les pompes à chaleur (WP).
